# EUROPÄISCHE PATENTSCHRIFT

(11) **EP 3 075 471 B1**
(45) Veröffentlichungstag und Bekanntmachung des Hinweises auf die Patenterteilung: **03.11.2021**
(21) Anmeldenummer: 15161604.2
(22) Anmeldetag: 30.03.2015
(51) Int. Cl.: B22F 10/20, B22F 5/00, F01D 25/12, F01D 25/16, F16C 35/04, F01D 25/14

(54) **VERFAHREN ZUM GENERATIVEN HERSTELLEN EINES GASTURBINENGEHÄUSETEILS**
METHOD OF PRODUCTION OF A GAS TURBINE HOUSING SECTION BY ADDITIVE MANUFACTURING
PROCÉDÉ DE FABRICATION D'UNE PARTIE DE BOÎTIER DE TURBINE À GAZ PAR MÉTHODE DE FABRICATION ADDITIVE

(43) Veröffentlichungstag der Anmeldung: 05.10.2016
(73) Patentinhaber: MTU Aero Engines AG, 80995 München (DE)
(72) Erfinder: Liebl, Christian, 85461 Bockhorn (DE); Scharl, Richard, 85757 Karlsfeld (DE); Buck, Alexander, 80997 München (DE); Kirchner, Daniel, 80639 München (DE); Heß, Thomas, 81541 München (DE)

(56) Entgegenhaltungen:
- EP-A2- 2 511 030
- DE-A1-102006 049 218
- DE-A1-102010 046 579
- DE-A1-102011 108 957
- FR-A1- 2 978 197
- US-A- 4 735 556
- US-A1- 2014 007 588

## Beschreibung

Die vorliegende Erfindung betrifft ein Verfahren zum generativen Herstellen eines Gasturbinengehäuseteils sowie ein nach einem solchen Verfahren hergestelltes Gasturbinengehäuseteil.

Vor allem im Turbinenbereich von Gasturbinen können Temperaturen auftreten, die ohne Schutzmaßnahmen zu einer Beeinträchtigung, insbesondere einem Verkoken von Schmiermittel in einer Lagerkammer, führen können.

Daher sind aus betriebsinterner Praxis neben thermischen Beschichtungen außenliegende Hitzeschutzschilde bekannt, die die Lagerkammer thermisch abschirmen. Diese werden bisher als separate Blechkonstruktionen gefertigt und anschließend mit der Lagerkammer verbunden. Die US 2014/007588 A1 offenbart ein Gasturbinengehäuseteil, welches eine Lagerkammeranordnung mit einer Schale und implizit wenigstens einer Lageraufnahme, an welcher ein Lager zum radialen und/ oder axialen Lagern eines weiteren Gasturbinenbauteils angeordnet ist, und einen Hitzeschutzschild.

Eine Aufgabe einer Ausführung der vorliegenden Erfindung ist es, ein Gasturbinengehäuseteil und/oder dessen Herstellung zu verbessern.

Diese Aufgabe wird durch ein Verfahren mit den Merkmalen des Anspruchs 1 gelöst. Anspruch 10 stellt ein Gasturbinengehäuseteil unter Schutz, welches nach einem hier beschriebenen Verfahren hergestellt ist. Vorteilhafte Ausführungsformen der Erfindung sind Gegenstand der Unteransprüche.

Gemäß der vorliegenden Erfindung weist eine Gasturbinengehäuseteil eine Lagerkammeranordnung bzw. Lagerkammer mit einer Schale und einer oder mehreren Lageraufnahmen auf, an denen jeweils ein Lager zum radialen und/oder axialen, insbesondere geschmierten, Lagern eines weiteren Gasturbinenbautteils, insbesondere Rotors, einer Gasturbine, angeordnet, insbesondere form-, reib- und/oder stoffschlüssig befestigt, wird bzw. ist bzw. die hierzu vorgesehen bzw. eingerichtet sind.

Das Gasturbinengehäuseteil kann insbesondere ein Flugtriebwerk-Gasturbinengehäuseteil sein. In einer Ausführung ist es ein (Gasturbinen) Außengehäuseteil, in einer anderen Ausführung ein (Gasturbinen) Außengehäuseteil, welches von einem weiteren Gasturbinenaußengehäuse umgeben bzw. in diesem aufgenommen wird bzw. ist bzw. hierzu vorgesehen bzw. eingerichtet ist. In einer Ausführung ist es ein Gehäuseteil eines Turbinenbereichs, insbesondere wenigstens einer Turbinenstufe.

Die Schale ist in einer Ausführung teil-, insbesondere halbringartig oder vollringartig bzw. mit einem wenigstens in einem Axialabschnitt geschlossenen Umfang ausgebildet.

Nach einem Aspekt der vorliegenden Erfindung weist das Gasturbinengehäuseteil einen Hitzeschutzschild zum thermischen Abschirmen der Lagerkammer(anordnung) auf, der die Schale (von) radial außen in Umfangsrichtung vollständig bzw. über ihren gesamten Umfang oder teilweise bzw. nur auf einem Teil(bereich) ihres Umfang um- bzw. übergereift und/oder in Axialrichtung vollständig bzw. über ihre gesamte axiale Länge oder teilweise bzw. nur auf einem Teil(bereich) ihrer axialen Länge um- bzw. übergereift.

Der Hitzeschutzschild ist in einer Ausführung teil-, insbesondere halbringartig oder vollringartig bzw. mit einer wenigstens in einem Axialabschnitt geschlossenen Umfang ausgebildet.

Gemäß der vorliegenden Erfindung wird bzw. ist der Hitzeschutzschild integral mit der Lagerkammeranordnung generativ bzw. additiv durch schichtweises selektives Verfestigen eines Ausgangsmaterials bzw. mittels eines generativen bzw. additiven Herstellungsverfahrens hergestellt.

Hierdurch kann vorteilhaft eine Lagerkammer(anordnung) mit einem außenliegenden integrierten thermischen bzw. Hitzeschutzschild zur Verfügung gestellt werden, der die Lagerkammer(anordnung) thermisch abschirmt. Durch die integrale Ausbildung mittels eines generativen Herstellungsverfahrens kann insbesondere ein strukturmechanisch, insbesondere festigkeits- und/oder schwingungstechnisch, vorteilhaftes Gasturbinengehäuseteil hergestellt werden.

In einer Ausführung wird bzw. ist der Hitzeschutzschild mit einer oder mehreren lokalen Wandstärkenverdünnungen und/oder einer oder mehreren lokalen Wandstärkenaufdickungen generativ hergestellt, wobei in einer Ausführung eine Wandstärke in einer lokalen Wandstärkenverdünnung bzw. -aufdickung sich von axial und/oder in Umfangsrichtung benachbarten Wandstärken des Hitzeschutzschildes um wenigstens 10%, insbesondere wenigstens 25%, und/oder wenigstens 1 mm, insbesondere wenigstens 2 mm, unterscheidet. Durch solche lokalen Wandstärkenverdünnungen bzw. -aufdickungen kann in einer Ausführung eine thermisch und/oder strukturmechanisch, insbesondere festigkeits- und/oder schwingungstechnisch, vorteilhafte Charakteristik des Hitzeschutzschildes zur Verfügung gestellt werden.

Zusätzlich oder alternativ wird bzw. ist der Hitzeschutzschild in einer Ausführung mit einer oder mehreren Sicken generativ hergestellt, wobei in einer Ausführung eine Wandstärke in einer Sicke sich von axial und/oder in Umfangsrichtung benachbarten Wandstärken des Hitzeschutzschildes um höchstens 10% und/oder höchstens 1 mm unterscheidet und gegenüber diesen benachbarten Wandbereichen radial um wenigstens 1 mm, insbesondere wenigstens 2 mm, abgesenkt oder ausgestellt ist. In einer Ausführung erstreckt sind eine Sicke in Umfangs- und/oder Axialrichtung. Durch Sicken kann in einer Ausführung eine thermisch und/oder strukturmechanisch, insbesondere festigkeits- und/oder schwingungstechnisch, vorteilhafte Charakteristik des Hitzeschutzschildes zur Verfügung gestellt werden.

Zusätzlich oder alternativ weist das Gasturbinengehäuseteil in einer Ausführung eine oder mehrere radiale Versteifungsrippen auf, die zwischen Hitzeschutzschild und Schale angeordnet sind, integral mit dem Hitzeschutzschild und der Lagerkammer(anordnung) generativ durch schichtweises selektives Verfestigen des Ausgangsmaterials hergestellt werden bzw. sind, und diese miteinander verbinden, wobei eine oder mehrere radiale Versteifungsrippen sich einer Weiterbildung in Umfangs- und/oder Axialrichtung erstrecken.

In einer Ausführung wird bzw. ist der Hitzeschutzschild mit einer oder mehreren Öffnung(en) zum teilweisen oder, wenigstens im Wesentlichen, vollständigen Entfernen von nicht verfestigtem Ausgangsmaterial nach dem generativen Herstellen bzw. schichtweisen Aufbauen des Gasturbinengehäuseteils generativ hergestellt. Zusätzlich oder alternativ wird bzw. ist in einer Ausführung die Schale mit einer oder mehreren Öffnung zum teilweisen oder, wenigstens im Wesentlichen, vollständigen Entfernen von nicht verfestigtem Ausgangsmaterial nach dem generativen Herstellen bzw. schichtweisen Aufbauen des Gasturbinengehäuseteils generativ hergestellt.

Entsprechend wird in einer Ausführung nicht verfestigtes Ausgangsmaterial nach dem generativen Herstellen bzw. schichtweisen Aufbauen des Gasturbinengehäuseteils teilweise oder, wenigstens im Wesentlichen, vollständig aus der bzw. einer oder mehreren dieser Öffnung(en) entfernt.

In einer Weiterbildung wird/werden bzw. ist/sind die bzw. eine oder mehrere dieser Öffnung(en) nach dem teilweisen oder, wenigstens im Wesentlichen, vollständigen Entfernen von nicht verfestigtem Ausgangsmaterial, insbesondere stoff-, reib- und/oder formschlüssig und/oder mittels eines Deckels, verschlossen. Hierdurch kann in einer Ausführung eine thermisch und/oder strukturmechanisch, insbesondere festigkeits- und/oder schwingungstechnisch, vorteilhafte Charakteristik des Hitzeschutzschildes zur Verfügung gestellt werden. Zusätzlich oder alternativ wird/werden bzw. ist/sind die bzw. eine oder mehrere dieser Öffnung(en) nach dem teilweisen oder, wenigstens im Wesentlichen, vollständigen Entfernen von nicht verfestigtem Ausgangsmaterial nicht verschlossen bzw. ist/sind bzw. verbleibt/verbleiben offen. Hierdurch kann in einer Ausführung ein Ausgleich thermischer Ausdehnungen und/oder ein Inspektions- und/oder Wartungszugang zur Verfügung gestellt werden.

In einer Ausführung weist der Hitzeschutzschild eine maximale Wandstärke auf, die höchstens 75%, insbesondere höchstens 50%, insbesondere höchstens 25%, einer maximalen Wandstärke der Lagerkammeranordnung, insbesondere der Schale, einer Lageraufnahme und/oder eines diese verbindenden Radialflanschs, beträgt. Zusätzlich oder alternativ beträgt in einer Ausführung eine maximale Wandstärke des Hitzeschutzschilds höchstens 5 mm. Zusätzlich oder alternativ beträgt in einer Ausführung eine maximale Wandstärke der Lagerkammeranordnung, insbesondere der Schale, einer Lageraufnahme und/oder eines diese verbindenden Radialflanschs, wenigstens 10 mm, insbesondere wenigstens 15 mm.

In einer Ausführung liegt das (noch) nicht verfestigte Ausgangsmaterial flüssig oder schüttgutartig, insbesondere pulverförmig vor und/oder wird bzw. ist thermisch, chemisch und/oder optisch schichtweise selektiv verfestigt.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein Herstellen eines Gasturbinengehäuseteils nach einer Ausführung der vorliegenden Erfindung; und
- Fig. 2: einen Teil einer Gasturbine mit einem Gasturbinengehäuseteil nach einer Ausführung der vorliegenden Erfindung.

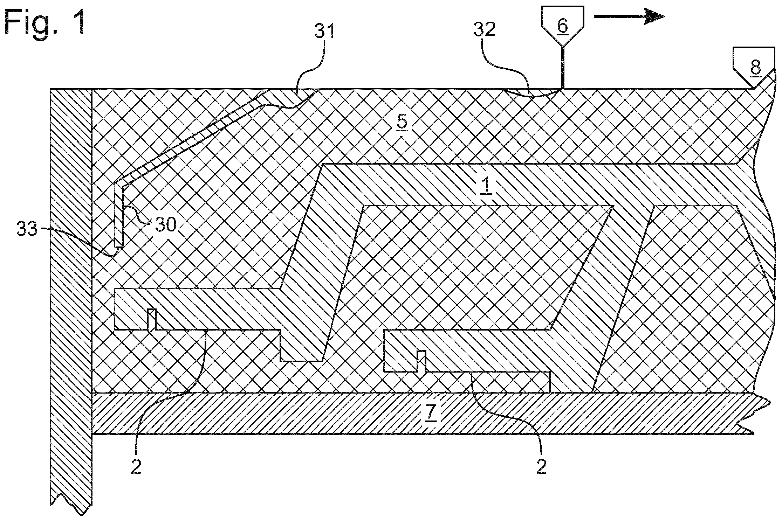

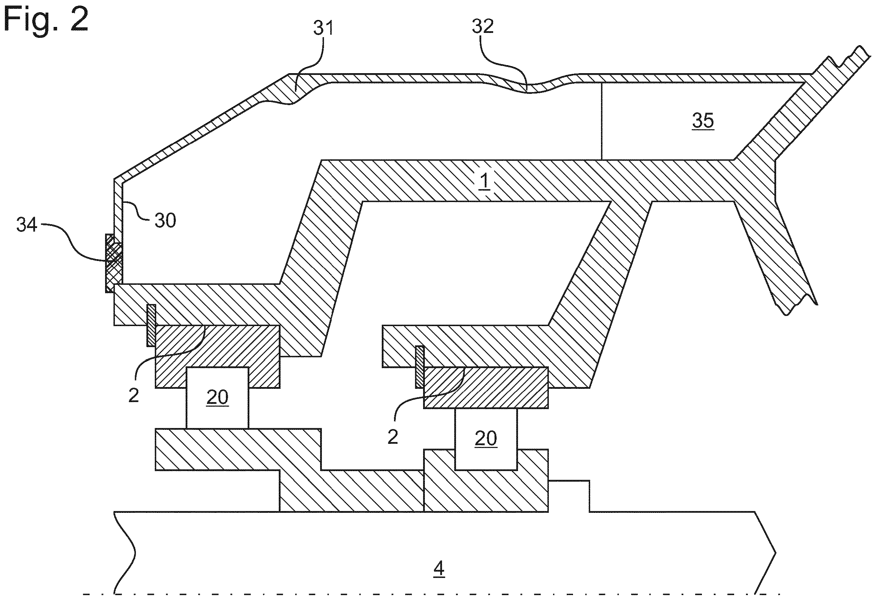

Fig. 1 zeigt ein generatives Herstellen eines Gasturbinengehäuseteils nach einer Ausführung der vorliegenden Erfindung, Fig. 2 das generativ hergestellte Gasturbinengehäuseteil in einem in einer Gasturbine eingebauten Zustand.

Wie insbesondere in Fig. 2 erkennbar, weist das generativ (fertig) hergestellte Gasturbinengehäuseteil eine Lagerkammer(anordnung) mit einer Schale 1 und zwei Lageraufnahmen 2, an denen jeweils ein Lager 20 zum geschmierten Lagern eines Rotors 4 der Gasturbine form- und/oder reibschlüssig befestigt ist bzw. die hierzu eingerichtet sind, sowie einen Hitzeschutzschild 30 auf, der die Schale 1 radial außen umgreift.

Wie insbesondere in Fig. 1 erkennbar, die einen Zustand während des generativen Herstellens des Gasturbinengehäuseteils zeigt, wird bzw. ist der Hitzeschutzschild 30 integral mit der Lagerkammer(anordnung) 1, 2 generativ durch schichtweises selektives Verfestigen eines flüssigen oder schüttgutartigen, insbesondere pulverförmigen, Ausgangsmaterials 5 hergestellt, indem dieses schichtweise selektiv thermisch, chemisch und/oder optisch, beispielsweise durch einen Laser 6, verfestigt wird. Dabei verschiebt eine bewegliche Plattform 7 das entstehende Gasturbinengehäuseteil, so dass auf seiner in Fig. 2 oberen Stirnseite jeweils neues Ausgangsmaterial 5 selektiv festigt und dabei mit der Stirnseite verbunden wird, insbesondere, nachdem eine neue Schicht Ausgangsmaterial angeordnet worden ist, beispielsweise durch einen Rakel 8.

Exemplarisch weist der Hitzeschutzschild im Ausführungsbeispiel eine lokale Wandstärkenaufdickung 31 sowie eine Sicke 32 (vgl. Fig. 2) auf, die generativ hergestellt werden bzw. sind (vgl. Fig. 1).

Wie insbesondere in Fig. 1 erkennbar, wird bzw. ist der Hitzeschutzschild mit einer Öffnung 33 zum Entfernen von nicht verfestigtem Ausgangsmaterial 5 hergestellt, aus dem entsprechend nach dem generativen Herstellen des Gasturbinengehäuseteils nicht verfestigtes Ausgangsmaterial entfernt wird bzw. ist.

Das Gasturbinengehäuseteil weist radiale Versteifungsrippen 35 auf, die zwischen Hitzeschutzschild 30 und Schale 1 angeordnet sind, sich in Axialrichtung (horizontal in Fig. 2) erstrecken und diese zusätzlich zu Übergängen links und rechts in Fig. 2 miteinander verbinden.

Im Ausführungsbeispiel wird bzw. ist die Öffnung nach dem Entfernen des nicht verfestigten Ausgangsmaterials, insbesondere stoff-, reib- und/oder formschlüssig, durch einen Deckel 34 verschlossen, in einer nicht dargestellten Abwandlung kann die Öffnung auch in der Schale 1 angeordnet und/oder nicht verschlossen werden bzw. offen sein bzw. verbleiben.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: Schale
- 2: Lageraufnahme
- 20: Lager
- 30: Hitzeschutzschild
- 31: Wandstärkenaufdickung
- 32: Sicke
- 33: Öffnung
- 34: Deckel
- 35: Rippe
- 4: Rotor
- 5: nicht verfestigtes Ausgangsmaterial
- 6: Laser
- 7: Plattform
- 8: Rakel

## Patentansprüche

1. Verfahren zum Herstellen eines Gasturbinengehäuseteils, welches eine Lagerkammeranordnung mit einer Schale (1) und wenigstens einer Lageraufnahme (2) an welcher ein Lager (20) zum radialen und/ oder axialen Lagern eines weiteren Gasturbinenbauteils, insbesondere eines Rotors (4) einer Gasturbine angeordnet ist und einen Hitzeschutzschild (30) zum thermischen Abschirmen der Lagerkammeranordnung aufweist, der die Schale (1) radial außen wenigstens teilweise umgreift, wobei der Hitzeschutzschild (30) integral mit der Lagerkammeranordnung generativ durch schichtweises selektives Verfestigen eines Ausgangsmaterials (5) hergestellt wird.

2. Verfahren nach dem vorhergehenden Anspruch, **dadurch gekennzeichnet, dass** der Hitzeschutzschild (30) mit wenigstens einer lokalen Wandstärkenverdünnung und/oder wenigstens einer lokalen Wandstärkenaufdickung (31) generativ hergestellt wird.

3. Verfahren nach einem der vorhergehenden Ansprüche, **dadurch gekennzeichnet, dass** der Hitzeschutzschild (30) mit wenigstens einer Sicke (32) generativ hergestellt wird.

4. Verfahren nach einem der vorhergehenden Ansprüche, **dadurch gekennzeichnet, dass** der Hitzeschutzschild (30) und/oder die Schale (1) mit wenigstens einer Öffnung (33) zum wenigstens teilweisen Entfernen von nicht verfestigtem Ausgangsmaterial (5) generativ hergestellt wird.

5. Verfahren nach dem vorhergehenden Anspruch, **dadurch gekennzeichnet, dass** nicht verfestigtes Ausgangsmaterial (5) aus der wenigstens einen Öffnung (33) wenigstens teilweise entfernt wird.

6. Verfahren nach dem vorhergehenden Anspruch, **dadurch gekennzeichnet, dass** wenigstens eine Öffnung (33) nach dem wenigstens teilweisen Entfernen von nicht verfestigtem Ausgangsmaterial (5), insbesondere Stoff-, reib- und/oder formschlüssig, verschlossen (34) wird oder nicht verschlossen wird.

7. Verfahren nach einem der vorhergehenden Ansprüche, **dadurch gekennzeichnet, dass** der Hitzeschutzschild (30) eine maximale Wandstärke aufweist, die höchstens 75% einer maximalen Wandstärke der Lagerkammeranordnung und/oder höchstens 5 mm beträgt.

8. Verfahren nach einem der vorhergehenden Ansprüche, **dadurch gekennzeichnet, dass** die Lagerkammeranordnung eine maximale Wandstärke aufweist, die wenigstens 10 mm beträgt.

9. Verfahren nach einem der vorhergehenden Ansprüche, **dadurch gekennzeichnet, dass** das nicht verfestigte Ausgangsmaterial (5) flüssig oder schüttgutartig, insbesondere pulverförmig, ist und/oder thermisch, chemisch und/oder optisch schichtweise selektiv verfestigt (6) wird.

10. Gasturbinengehäuseteil, welches eine Lagerkammeranordnung mit einer Schale (1) und wenigstens einer Lageraufnahme (2), an welcher ein Lager (20) zum radialen und/ oder axialen Lagern eines weiteren Gasturbinenbauteils, insbesondere eines Rotors (4) einer Gasturbine angeordnet ist, und einen Hitzeschutzschild (30) zum thermischen Abschirmen der Lagerkammeranordnung aufweist, der die Schale (1) radial außen wenigstens teilweise umgreift, wobei der Hitzeschutzschild (30) integral mit der Lagerkammeranordnung generativ durch schichtweises selektives Verfestigen eines Ausgangsmaterials (5) hergestellt ist, nämlich nach einem Verfahren nach einem der vorhergehenden Ansprüche.

## Claims

1. Method for producing a gas turbine housing part which has a bearing chamber arrangement with a shell (1) and at least one bearing receptacle (2) on which a bearing (20) is arranged for the radial and/or axial mounting of a further gas turbine component, in particular a rotor (4) of a gas turbine, and a heat protection shield (30) for thermally shielding the bearing chamber arrangement, which shield at least partially surrounds the shell (1) radially on the outside, wherein the heat protection shield (30) is additively produced integrally with the bearing chamber arrangement by selective compaction of a starting material (5) in layers.

2. Method according to the preceding claim, **characterized in that** the heat protection shield (30) is additively produced with at least one local wall thickness thinning and/orat least one local wall thickness thickening (31).

3. Method according to either of the preceding claims, **characterized in that** the heat protection shield (30) is additively produced with at least one bead (32).

4. Method according to any of the preceding claims, **characterized in that** the heat protection shield (30) and/orthe shell (1) is additively produced with at least one opening (33) for at least partially removing non-compacted starting material (5).

5. Method according to the preceding claim, **characterized in that** non-compacted starting material (5) is at least partially removed from the at least one opening (33).

6. Method according to the preceding claim, **characterized in that** at least one opening (33) is closed (34) after the at least partial removal of non-compacted starting material (5), in particular in a bonded, frictional and/or form-fitting manner, or is not closed.

7. Method according to any of the preceding claims, **characterized in that** the heat protection shield (30) has a maximum wall thickness which is at most 75% of a maximum wall thickness of the bearing chamber arrangement and/or at most 5 mm.

8. Method according to any of the preceding claims, **characterized in that** the bearing chamber arrangement has a maximum wall thickness which is at least 10 mm.

9. Method according to any of the preceding claims, **characterized in that** the non-compacted starting material (5) is liquid or bulk material, in particular in the form of power, and/or is selectively compacted (6) in layers thermally, chemically and/or optically.

10. Gas turbine housing part which has a bearing chamber arrangement with a shell (1) and at least one bearing receptacle (2) on which a bearing (20) is arranged for the radial and/or axial mounting of a further gas turbine component, in particular a rotor (4) of a gas turbine, and a heat protection shield (30) for thermally shielding the bearing chamber arrangement, which shield at least partially surrounds the shell (1) radially on the outside, wherein the heat protection shield (30) is additively produced integrally with the bearing chamber arrangement by selective compaction of a starting material (5) in layers, namely in accordance with a method according to any of the preceding claims.

## Revendications

1. Procédé de fabrication d'une partie de carter de turbine à gaz, laquelle présente un agencement de chambre de palier comportant une coque (1) et au moins un logement de palier (2) sur lequel est disposé un palier (20) destiné au montage radial et/ou axial d'un autre composant de turbine à gaz, en particulier d'un rotor (4) d'une turbine à gaz, et un écran de protection thermique (30) destiné à protéger thermiquement l'agencement de chambre de palier et qui entoure au moins partiellement la coque (1) radialement à l'extérieur, l'écran de protection thermique (30) étant fabriqué d'un seul tenant avec l'agencement de chambre de palier de manière générative par solidification sélective en couches successives d'un matériau de base (5).

2. Procédé selon la revendication précédente, **caractérisé en ce que** l'écran de protection thermique (30) est fabriqué de manière générative avec au moins un amincissement d'épaisseurde paroi local et/ou au moins un épaississement d'épaisseur de paroi local (31).

3. Procédé selon l'une des revendications précédentes, **caractérisé en ce que** l'écran de protection thermique (30) est produit de manière générative avec au moins une moulure (32).

4. Procédé selon l'une des revendications précédentes, **caractérisé en ce que** l'écran de protection thermique (30) et/ou la coque (1) sont fabriqués de manière générative avec au moins une ouverture (33) destinée à l'évacuation au moins partielle du matériau de base (5) non solidifié.

5. Procédé selon la revendication précédente, **caractérisé en ce que** le matériau de base (5) non solidifié est au moins partiellement évacué par l'au moins une ouverture (33).

6. Procédé selon la revendication précédente, **caractérisé en ce qu'**au moins une ouverture (33) est ou n'est pas fermée (34) après l'évacuation au moins partielle du matériau de base (5) non solidifié, en particulier par liaison de matière, par friction et/ou par complémentarité de forme.

7. Procédé selon l'une des revendications précédentes, **caractérisé en ce que** l'écran de protection thermique (30) présente une épaisseur de paroi maximale qui est au maximum de 75 % d'une épaisseur de paroi maximale de l'agencement de chambre de palier et/ou au maximum de 5 mm.

8. Procédé selon l'une des revendications précédentes, **caractérisé en ce que** l'agencement de chambre de palier présente une épaisseurde paroi maximale qui est d'au moins 10 mm.

9. Procédé selon l'une des revendications précédentes, **caractérisé en ce que** le matériau de base (5) non solidifié est liquide ou en vrac, en particulier pulvérulent, et/ou est sélectivement solidifié (6) en couches successives thermiquement, chimiquement et/ou optiquement.

10. Partie de carter de turbine à gaz, laquelle présente un agencement de chambre de palier comportant une coque (1) et au moins un logement de palier (2) sur lequel est disposé un palier (20) destiné au montage radial et/ou axial d'un autre composant de turbine à gaz, en particulier d'un rotor (4) d'une turbine à gaz, et un écran de protection thermique (30) destiné à protéger thermiquement l'agencement de chambre de palier et qui entoure au moins partiellement la coque (1) radialement à l'extérieur, l'écran de protection thermique (30) étant fabriqué d'un seul tenant avec l'agencement de chambre de palier de manière générative par solidification sélective en couches successives d'un matériau de base (5), à savoir selon un procédé selon l'une des revendications précédentes.
